# EUROPÄISCHE PATENTSCHRIFT

(11) **EP 2 097 426 B1**
(45) Veröffentlichungstag und Bekanntmachung des Hinweises auf die Patenterteilung: **23.06.2010**
(21) Anmeldenummer: 07847458.2
(22) Anmeldetag: 28.11.2007
(51) Int. Cl.: C07F 7/18

(54) **VERFAHREN ZUR HERSTELLUNG VON ISOCYANATOORGANOSILANEN**
PROCESS FOR PREPARING ISOCYANATOORGANOSILANES
PROCÉDÉ DE PRODUCTION D'ISOCYANATO-ORGANOSILANES

(30) Priorität: 04.12.2006 DE 102006057118
(43) Veröffentlichungstag der Anmeldung: 09.09.2009
(73) Patentinhaber: Wacker Chemie AG, 81737 München (DE)
(72) Erfinder: BAUMANN, Frank, 84529 Tittmoning (DE); STANJEK, Volker, 84539 Ampfing (DE); FREY, Thomas, 84489 Burghausen (DE)
(74) Vertreter: Fritz, Helmut
(86) Internationale Anmeldenummer: PCT/EP2007/062935
(87) Internationale Veröffentlichungsnummer: WO 2008/068175

(56) Entgegenhaltungen:
- EP-A- 1 010 704

## Beschreibung

Die Erfindung betrifft ein Verfahren zur Herstellung von Isocyanatoalkylsilanen.

Es besteht seit geraumer Zeit ein großes Interesse an einer wirtschaftlichen Methode zur Herstellung von Isocyanatoorganosilanen in hohen Ausbeuten und Reinheiten. Die genannten Verbindungen sind von hoher wirtschaftlicher Bedeutung.

Isocyanatosilane können beispielsweise als Haftvermittler zwischen organischen Polymeren und anorganischen Materialien verwendet werden. Vor allem aber werden Isocyanatoorganosilane industriell zur Terminierung von organischen Polyolen z.B. Polyetherpolyolen, Polyurethanen, Polyestern oder Poly-(meth-) acrylaten eingesetzt. Die resultierenden alkoxysilanterminierten Prepolymere härten bei Kontakt mit der Luftfeuchtigkeit aus und werden u.a. als Kleb- und Dichtstoffe oder auch als Lackharze bzw. als Lackharzbestandteile eingesetzt.

Im Stand der Technik werden dabei zumeist herkömmliche γ-Isocyanatopropylsilane der allgemeinen Formel (1) verwendet

OCN-(CH₂)₃-SiR'_{y}(OR")_{3-y} (1),

wobei R' und R" Alkylreste und y eine Zahl von 0-3, bevorzugt 3 oder 2, darstellen.

In jüngerer Zeit richtet sich jedoch ein besonderes Interesse auf die sogenannten α-Isocyanatomethylsilane der allgemeinen Formel (2)

OCN-(CH₂)-SiR'_{y}(OR")_{3-y} (2),

wobei R' und R" und y die oben angegebenen Bedeutungen aufweisen.

Diese α-Isocyanatomethylsilane zeichnen sich durch eine besonders hohe Reaktivität gegenüber Luftfeuchtigkeit aus und sind zur Herstellung von alkoxysilanterminierten Prepolymeren mit hoher aber regulierbarer Härtungsgeschwindigkeit geeignet (beschrieben z.B. in EP 1 421 129). Zudem können die entsprechenden α-silanterminierten Prepolymere auch ohne die unter toxikologischen Gesichtspunkten umstrittenen Zinnkatalysatoren vernetzt werden (beschrieben u.a. in EP 1 421 129).

Es sind verschiedene Verfahren zur Herstellung von Isocyanatoorganosilanen bekannt. So wird in EP 1 010 704 ein Verfahren zur Herstellung von γ-Isocyanatoorganosilanen beschriebenen, bei dem Carbamatoorganosilane in einer kombinierten Spalt- und Rektifizierkolonne bei Drücken von vorzugsweise 40-80 mbar zu den entsprechenden Isocyanatoorganosilanen gespalten werden. Der flüssigen Phase wird dabei Zinn-II-chlorid als Katalysator zugesetzt. Nachteilig an diesem Prozess sind dessen sehr niedrige Umsatzraten, die zudem einen hohen apparativen Aufwand zur Isolierung und Reinigung der Reaktionsprodukte erforderlich machen. Deshalb wird dieses Verfahren bis heute technisch nicht angewendet.

In DE 101 08 543 wird die Herstellung von Isocyanatoorganosilanen aus den entsprechenden Carbamatoorganosilanen und Alkyl- oder Vinylchlorsilanen beschrieben. Auch dieses Verfahren hat sich als ungeeignet für eine technische Produktion erwiesen und wird daher bis heute nicht eingesetzt.

Aus EP 0 649 850 ist ein Verfahren bekannt, bei dem Carbamatoorganosilane thermisch zu Isocyanatoorganosilanen und Methanol gespalten werden. Die Spaltung findet dabei in der Gasphase unter Normal- oder reduziertem Druck statt. Die Reaktion wird bevorzugt in einem Röhrenreaktor durchgeführt, in dem das verdampfte Carbamatosilan auf Temperaturen erhitzt wird, die deutlich über der Verdampfungstemperatur dieses Silans liegen. Eine Verbesserung dieses Verfahrens, bei dem die Carbamatspaltung in Gegenwart eines heterogenen Katalysators durchgeführt wird, ist zudem aus EP 1 343 793 bekannt. Nachteilig an diesen Verfahren sind u.a. die hohe thermische Belastung des hochreaktiven Reaktionsproduktes sowie der hohe technische und energetische Aufwand.

Die thermische Spaltung von Carbamatoorganosilanen zu Isocyanatoorganosilanen und Methanol wird zudem in US 6,008,396 beschrieben. Hier werden Carbamatoorganosilane in inerten heißen Medien unter Abspaltung von Alkohol in die korrespondierenden Isocyanatosilane umgewandelt, welche dann direkt destillativ aus der Reaktionsmischung entfernt werden. Auch bei diesem Verfahren werden die Reaktionsprodukte hohen thermischen Belastungen ausgesetzt. Zudem können sich Nebenprodukte und Verunreinigungen in dem inerten Medium akkumulieren.

Ein weiteres Verfahren, bei dem die Isocyanatoorganosilane unter Einwirkung von Mikrowellen hergestellt werden, ist in WO 2005/056564 beschrieben. In WO 2005/055974 schließlich wird dieses Mikrowellenverfahren in Kombination mit fluidisierenden Feststoffpartikeln beschrieben. Auch dieses Verfahren ist mit einem hohen technischen Aufwand verbunden.

Aufgabe war daher die Entwicklung eines wesentlich einfacheren und technisch problemlos umsetzbaren Verfahrens, mit dem sich Isocyanatoalkylsilane, insbesondere Isocyanatoalkylsilane der Formeln (1) und (2) in hohen Ausbeuten herstellen lassen.

Gegenstand der Erfindung ist ein Verfahren zur Spaltung von carbamatfunktionellem Silan (C) zu isocyanatfunktionellem Silan (I) und Alkohol, bei dem
a) das flüssige carbamatfunktionelle Silan (C) unter Einwirkung eines Katalysators (K) in einer Verdampfungseinheit unter einem Druck von über 100 mbar erhitzt wird, und
b) das dabei entstehende isocyanatfunktionelle Silan (I) verdampft wird.

Einen wichtigen Aspekt der Erfindung stellt die Durchführung der erfindungsgemäßen Reaktion in einem flüssigen Film mit dünnen Schichtdicken dar, der eine zügige Verdampfung des gebildeten isocyanatfunktionellen Silans (I) sowie des als zweitem Spaltprodukt gebildeten Alkohols erlaubt. Diese zügige Verdampfung verhindert nicht nur, daß sich in der Katalysator (K)-haltigen flüssigen Phase ein Gleichgewicht einstellen und die Reaktion damit zum Stillstand kommen kann. Die Entfernung des isocyanatfunktionellen Silans (I) verhindert gleichzeitig, daß dieses durch Folgereaktionen, z.B. durch eine Isocyanuratbildung, abgebaut werden kann.

Daher ist ein weiterer Gegenstand der Erfindung ein Verfahren zur Spaltung von carbamatfunktionellem Silan (C) zu isocyanatfunktionellem Silan (I) und Alkohol, bei dem
a) das flüssige carbamatfunktionelle Silan (C) unter Einwirkung eines Katalysators (K) in einem flüssigen Film (F) mit einer Schichtdicke von maximal 5 cm und unter einem Druck von mindestens 80 mbar erhitzt wird, und
b) das dabei entstehende isocyanatfunktionelle Silan (I) verdampft wird.

Die bevorzugte Schichtdicke des flüssigen Films (F) liegt dabei bevorzugt bei maximal 2 cm, besonders bevorzugt bei Schichtdicken von maximal 1 cm, wobei Schichtdicken von maximal 0,5 cm oder sogar von maximal 0,3 cm besonders vorteilhaft sind.

Üblicherweise ist der gleichzeitig entstehende Alkohol nicht wesentlich schwerer oder leichter flüchtig als das isocyanatfunktionelle Silan (I) und wird dann gemeinsam mit diesem verdampft.
Es kann, wenn auch nicht erwünscht, ein Teil des eingesetzten carbamatfunktionellen Silans (C) mit verdampft werden.

Bevorzugt wird das verdampfte Reaktionsprodukt danach direkt fraktioniert kondensiert, wobei gegebenenfalls vorhandener Alkohol vorzugsweise gasförmig abgetrennt und das isocyanatfunktionelle Silan (I) und das gegebenenfalls vorhandene carbamatfunktionelle Silan (C) gemeinsam oder gegebenenfalls auch nacheinander getrennt kondensiert wird. Durch die Abtrennung des Alkohols wird eine Rückreaktion des gebildeten isocyanatfunktionellen Silans (I) verhindert. Bevorzugt findet die Abtrennung des Alkohols in einem Kühler oder einer einfachen Trennsäule statt, in der der Alkohol gasförmig abgezogen wird und Silane (I) und (C) gemeinsam auskondensiert werden.

Bei der Verdampfungseinheit handelt es sich vorzugsweise um einen Dünnschicht-, Fallfilm- oder Kurzwegverdampfer. Besonders bevorzugt wird die erfindungsgemäße Spaltung der carbamatfunktionellen Silane (C) in einem konventionellen Dünnschichtverdampfer durchgeführt. Dieser wird vorzugsweise mit einer Wandtemperatur > 180 °C, bevorzugt >220 °C und besonders bevorzugt mit Wandtemperaturen >260 °C betrieben. Dabei werden vorzugsweise mehr als 10 % und besonders bevorzugt mehr als 20 % des in den Dünnschichtverdampfer eingebrachten Materials verdampft. In einer besonderen Ausführungsform der Erfindung werden nochmals deutlich höhere Verdampfungsraten von über 30 %, bzw. sogar über 50 % erreicht. Das verdampfte Material stellt dabei vorzugsweise eine Mischung aus unzersetztem carbamatfunktionellem Silan (C), isocyanatfunktionellem Silan (I) und Alkohol dar. Bevorzugt besteht das verdampfte Material zu mindestens 35 Gew.-%, besonders bevorzugt zu mindestens 50 Gew.-% aus dem jeweiligen isocyanatfunktionellen Silan (I).

Bei dem erfindungsgemäßen Verfahren wird die Verdampfung bevorzugt bei Drücken >100 mbar durchgeführt, wobei Drücke > 200 mbar bzw. >500 mbar besonders bevorzugt werden. Um eine möglichst hohe Verdampfungstemperatur und damit möglichst hohe Unsatzraten zu erreichen, wird die Verdampfung vorzugsweise jedoch ganz ohne Vakuum - also bei Atmosphärendruck - oder sogar bei einem leichten Überdruck durchgeführt, wobei ein Druckbereich von 1-2 bar besonders bevorzugt wird. Bei einer weiteren Ausführung der Erfindung wird die Verdampfung vorzugsweise bei Drücken >2 bar oder sogar bei Drücken >3 bar durchgeführt.

Bei einer bevorzugten Ausführungsform der Erfindung wird während des Verdampfungsvorganges ein inerter Gasstrom, z.B aus Argon, Wasserstoff oder Stickstoff durch diese Verdampfungseinheit geleitet. Dieser wird vorzugsweise vor der Einleitung in die Verdampfungseinheit auf Temperaturen von bevorzugt >200 °C, besonders bevorzugt auf Temperaturen >300 °C oder sogar auf Temperaturen >400 °C erhitzt. Der erhitzte Trägergasstrom unterstützt dabei die Erwärmung und Verdampfung des Reaktionsgemisches. Als Gas wird Stickstoff bevorzugt.

Gasstrom und Flüssigkeitsstrom können in der Verdampfungseinheit in gleicher wie auch in entgegengesetzter Richtung, d.h. im Gleich- wie auch im Gegenstrom geführt werden. In einer bevorzugten Ausführungsform wird jedoch eine Fahrweise im Gegenstromprinzip bevorzugt.

Bei einer bevorzugten Ausführungsform der Erfindung wird das carbamatfunktionelle Silan (C) vor der Einleitung in die Verdampfungseinheit vorerwärmt. Dabei wird es bevorzugt auf Temperaturen >100 °C, besonders bevorzugt auf Temperaturen >120 °C und insbesondere auf Temperaturen > 130 °C erhitzt. Diese Vorerwärumg beschleunigt die weitere Erwärmung der Reaktionsmischung in der Verdampfungseinheit auf die maximale Reaktions- und Verdampfungstemperatur.

Beim Katalysator (K) kann es sich um einen in ein Festbett in der Verdampfungseinheit eingebetteten Katalysator handeln, wobei das Festbett beispielsweise an der Wand des Dünnschichterverdampfers angebracht ist. Bevorzugt handelt es sich um einen Katalysator, der dem carbamatfunktionellen Silan (C) zugemischt wird. Besonders bevorzugt ist der Katalysator (K) flüssig oder aber im carbamatfunktionellen Silan (C) löslich. D.h. bevorzugt handelt es sich um eine homogene Katalyse. Bevorzugte Katalysatoren (K) stellen dabei sämtliche Verbindungen dar, die - insbesondere in der PU-Chemie - auch zur Katalyse von Kondensationsreaktionen von Isocyanaten und Alkoholen verwendet werden. Beispielhaft seien hier die üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc. genannt. Ebenso können auch zweiwertige Zinnkatalysatoren wie Zinndiacetat- oder Zinndilaurat verwendet werden. Des Weiteren können auch Bismutkatalysatoren, z.B. der Borchi-Katalysator, Titanate, z.B. Titan(IV)isopropylat, Eisen(III)-Verbindungen, z.B. Eisen(III)-acetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholinin etc., eingesetzt werden. Auch organische oder anorganische Brönstedsäuren wie Essigsäure, Trifluoressigsäure oder Benzoylchlorid, Salzsäure, Phoshorsäure deren Mono- und/oder Diester, wie z.B. Butylphosphat, (Iso-) Propylphosphat, Dibutylphosphat etc., sind als Katalysatoren (K) geeignet. Selbstverständlich können auch Kombinationen mehrerer Katalysatoren eingesetzt werden. Bevorzugt werden nicht bzw. nur wenig flüchtige Katalysatoren, insbesondere die oben genannten Metallkomplexe eingesetzt, wobei Zinn (IV), Zinn (II) und Eisen (III)-Komplexe besonders bevorzugt werden. Der Katalysator (K) wird dabei bevorzugt in Konzentrationen von 1 - 10 000 ppm eingesetzt, wobei Konzentrationen von 10 - 5 000 ppm bzw. 100 - 2 000 ppm besonders bevorzugt werden.

In einer bevorzugten Ausführungsform der Erfindung wird der Katalysator (K) und carbamatfunktionelles Silan (C) enthaltender Sumpfablauf aus dem Dünnschichtverdampfer mit frischem carbamatfunktionellem Silan (C) vermischt und erneut im erfindungsgemäßen Verfahren eingesetzt. Gegebenenfalls können zuvor Teile des Sumpfablaufes aus dem Prozess ausgeschleust werden, um eine Akkumulation von Nebenprodukten und/oder Verunreinigungen zu verhindern. Ebenso kann auch frischer Katalysator (K) ergänzt werden. Auf diese Weise wird der Katalysator (K) vollständig oder aber zumindest zu großen Teilen recycliert. D.h. selbstverständlich können auch katalytische wirkende Ab- bzw. Umbauprodukte, die sich aus dem ursprünglich zugesetzten Katalysator (K) während vorangegangener Dünnschichterdurchläufe gebildet haben, als Katalysator (K) dienen.

Bevorzugt wird im erfindungsgemässen Verfahren isocyanatfunktionelles Silan (I) der allgemeinen Formel (3)

OCN-(CH₂)ₓ-SiR¹ₐ(OR²)₃₋ₐ (3),

ausgehend von carbamatfunktionellem Silan(C) der allgemeinen Formel (4)

R³O-CO-HN-(CH₂)ₓ-SiR¹ₐ(OR²)₃₋ₐ (4),

hergestellt, wobei
- **R¹**: einen gegebenenfalls halogensubstituierten Alkyl-, Cycloalkyl-, Alkenyl- oder Arylrest mit 1-10 Kohlenstoffatomen,
- **R²**: einen Acyl, Alkyl-, Alkenyl-, Cycloalkyl- oder Arylrest mit 1-10 Kohlenstoffatomen oder einen ω-Oxaalkyl-alkylrest mit insgesamt 2-10 Kohlenstoffatomen,
- **R³**: einen Alkylrest mit 1-6 Kohlenstoffatomen oder einen ω-Oxaalkyl-alkylrest mit insgesamt 2-10 Kohlenstoffatomen,
- **x**: Werte von 1-8 und
- **a**: die Werte 0, 1, 2 oder 3 bedeuten.

Als Reste **R¹** werden Methyl-, Ethyl- oder Phenylgruppen bevorzugt. Bei den Resten **R²** und **R³** handelt es sich bevorzugt µm Acetyl und besonders bevorzugt um Methyl- oder Ethylgruppe. Vorzugsweise sind die Reste **R²** und **R³** identisch. Bei **a** handelt es sich bevorzugt um 0, 1 oder 2, besonders bevorzugt um 0 oder 1. Die Variable **x** steht bevorzugt für 1 oder 3 wobei ein Wert von 1 - d.h. die Herstellung von α-Isocyanatomethylsilanen - besonders bevorzugt wird.

Insbesondere zur Herstellung von α-Isocyanatomethylsilanen (I) ist das erfindungsgemäße Verfahren überraschend gut geeignet.
Diese Silane (I) können auf Grund einer höheren Spalttemperatur der korrespondierenden Carbamatosilane (C) mit den Verfahren entsprechend des Standes der Technik vergleichsweise schlecht hergestellt werden.

Die Aufreinigung der erfindungsgemäß hergestellten isocyanatfunktionellen Silane (I) erfolgt bevorzugt durch einen oder mehrere Destillationsschritte. Bevorzugt werden die isocyanatfunktionellen Silane (I) während ihrer Aufreinigung ausschließlich unter Schutzgas gehandhabt werden, um eine möglichst hohe Lagerstabilität dieser Silane zu gewährleisten.
Die Schutzgasatmosphäre weist dabei vorzugsweise einen Wassergehalt von unter 1000 ppm auf, wobei ein Wassergehalt von unter 250 ppm besonders bevorzugt wird. Als Schutzgas wird bevorzugt getrocknete Luft, Stickstoff oder Edelgase verwendet, wobei Stickstoff besonders bevorzugt wird.

### Beispiele:

### Beispiel 1:

α-Carbamatomethyl-dimethoxymethylsilan (GENIOSIL^{®} XL 65 der Wacker Chemie AG) wird mit 0,5 Gew.-% Dibutylzinndilaurat versetzt. Die erhaltene Mischung wird in einem induktiv geheizten Rohr auf ca. 130°C erwärmt
- Induktive Carbamatvorheizung mit ca. 2,2 KW und in einem Dünnschichtverdampfer mit den folgenden technischen Daten
- Verdampferfläche:0,25 m²
- Elektrische Wendelheizung mit ca. 6 KW unter den folgenden Bedingungen verdampft:

- Druck: 1,1 bar (absolut)
- Wandtemperatur des Dünnschichters: 275°C
- Verhältnis Destillat/Sumpfablauf: 26 kg /6 kg Anschließend wird der Dampf in einen geeigneten Kühler geleitet, in dem ein aus Carbamato- und Isocyanatosilan bestehendes Silangemisch auskondensiert wird, während das entstandene Methanol gasförmig abgetrennt wird. Es wird ein Silangemisch erhalten, das ca. 83 Mol-% α-Isocyanatomethyl-dimethoxymethylsilan und 17 Mol-% α-Carbamatomethyl-dimethoxymethylsilan enthält.
   Der Sumpfablauf des Dünnschichters besteht aus reinem α-Carbamatomethyl-dimethoxymethylsilan. Neben- oder Abbauprodukte entstehen in Mengen <<5 Gew.-%.

### Vergleichsbeispiel 2:

Reines α-Carbamatomethyl-dimethoxymethylsilan wird in dem in Beispiel 1 beschriebenen Dünnschichtverdampfer ohne Katalysatorzusatz verdampft. Ob der ausbleibenden chemischen Reaktion müssen die Bedingungen der Verdampfung etwas variiert werden:
- Druck:: 1,1 bar (absolut)
- Wandtemperatur des Dünnschichters: 320°C bis 340°C
- Verhältnis Destillat/Sumpfablauf: 26 kg /6 kg Die Aufarbeitung der Dampfphase erfolgt wie in Beispiel 1 beschrieben. Es wird ein Silangemisch erhalten, das ca. 16 Mol-% α-Isocyanatomethyl-dimethoxymethylsilan und 84 Mol-% α-Carbamatomethyl-dimethoxymethylsilan enthält

### Vergleichsbeispiel 3:

α-Carbamatomethyl-dimethoxymethylsilan (GENIOSIL^{®} XL 65 der Fa. Wacker) wird mit 0,5 Gew.-% Dibutylzinndilaurat versetzt und in dem in Beispiel 1 beschriebenen Dünnschichtverdampfer im Vakuum verdampft. Ob der ausbleibenden chemischen Reaktion müssen die Bedingungen der Verdampfung etwas variiert werden:
- Druck: 5 mbar
- Wandtemperatur des Dünnschichters: 220 °C
- Verhältnis Destillat/Sumpfablauf: 50/50
Die Aufarbeitung der Dampfphase erfolgt wie in Beispiel 1 beschrieben. Es wird ein Silangemisch erhalten, das ca. 3 Mol-% α-Isocyanatomethyl-dimethoxymethylsilan und 97 Mol-% α-Carbamatomethyl-dimethoxymethylsilan enthält.

## Patentansprüche

1. Verfahren zur Spaltung von carbamatfunktionellem Silan (C) zu isocyanatfunktionellem Silan (I) und Alkohol, bei dem
a) das flüssige carbamatfunktionelle Silan (C) unter Einwirkung eines Katalysators (K) in einer Verdampfungseinheit unter einem Druck von über 100 mbar erhitzt wird, und
b) das dabei entstehende isocyanatfunktionelle Silan (I) verdampft wird.

2. Verfahren zur Spaltung von carbamatfunktionellem Silan (C) zu isocyanatfunktionellem Silan (I) und Alkohol, bei dem
a) das flüssige carbamatfunktionelle Silan (C) unter Einwirkung eines Katalysators (K) in einem flüssigen Film (F) mit einer Schichtdicke von maximal 5 cm und unter einem Druck von mindestens 80 mbar erhitzt wird, und
b) das dabei entstehende isocyanatfunktionelle Silan (I) verdampft wird.

3. Verfahren nach Anspruch 1 oder 2, bei dem die Verdampfungseinheit ausgewählt wird aus Dünnschicht-, Fallfilm- und Kurzwegverdampfer.

4. Verfahren nach Anspruch 1 bis 3, bei dem das carbamatfunktionelle Silan (C) vor der Einleitung in die Verdampfungseinheit auf Temperaturen >100 °C vorerwärmt wird.

5. Verfahren nach Anspruch 1 bis 4, bei dem der Katalysator (K) flüssig oder im carbamatfunktionellen Silan (C) löslich ist.

6. Verfahren nach Anspruch 1 bis 5, bei dem das isocyanatfunktionelle Silan (I) der allgemeinen Formel (3)
OCN-(CH₂)ₓ-SiR¹ₐ(OR²)₃₋ₐ (3),
ausgehend von carbamatfunktionellem Silan(C) der allgemeinen Formel (4)
R³O-CO-HN-(CH₂)ₓ-SiR¹ₐ(OR²)₃₋ₐ (4),
hergestellt wird, wobei
**R¹** einen gegebenenfalls halogensubstituierten Alkyl-, Cycloalkyl-, Alkenyl- oder Arylrest mit 1-10 Kohlenstoffatomen,
**R²** einen Acyl, Alkyl-, Alkenyl-, Cycloalkyl- oder Arylrest mit 1-10 Kohlenstoffatomen oder einen ω-Oxaalkyl-alkylrest mit insgesamt 2-10 Kohlenstoffatomen,
**R³** einen Alkylrest mit 1-6 Kohlenstoffatomen oder einen ω-Oxaalkyl-alkylrest mit insgesamt 2-10 Kohlenstoffatomen,
**x** Werte von 1-8 und
**a** die Werte 0, 1, 2 oder 3 bedeuten.

7. Verfahren nach Anspruch 1 bis 6, bei dem **x** 1 oder 3 bedeutet.

8. Verfahren nach Anspruch 2, bei dem die Schichtdicke des flüssigen Films (F) maximal 1 cm beträgt.

## Claims

1. Process for cleaving carbamate-functional silane (C) to isocyanate-functional silane (I) and alcohol, wherein
a) the liquid carbamate-functional silane (C) is heated in an evaporating unit under a pressure of more than 100 mbar and under the action of a catalyst (K), and
b) the resulting isocyanate-functional silane (I) is evaporated.

2. Process for cleaving carbamate-functional silane (C) to isocyanate-functional silane (I) and alcohol, wherein
a) the liquid carbamate-functional silane (C) is heated in a liquid film (F) having a thickness of not more than 5 cm and under a pressure of at least 80 mbar and under the action of a catalyst (K), and
b) the resulting isocyanate-functional silane (I) is evaporated.

3. Process according to Claim 1 or 2, wherein the evaporating unit is selected from thin-film, falling-film and short-path evaporators.

4. Process according to Claim 1 to 3, wherein the carbamate-functional silane (C) is preheated to temperatures >100°C before being introduced into the evaporating unit.

5. Process according to Claim 1 to 4, wherein the catalyst (K) is liquid or is soluble in the carbamate-functional silane (C).

6. Process according to Claim 1 to 5, wherein the isocyanate-functional silane (I) of the general formula (3)
OCN-(CH₂)ₓ-SiR¹ₐ(OR²)₃₋ₐ (3),
is prepared starting from carbamate-functional silane (C) of the general formula (4)
R³O-CO-HN-(CH₂)ₓ-SiR¹ₐ(OR²)₃₋ₐ (4),
where
**R¹** is an optionally halogen-substituted alkyl, cycloalkyl, alkenyl or aryl radical having 1-10 carbon atoms,
**R²** is an acyl, alkyl, alkenyl, cycloalkyl or aryl radical having 1-10 carbon atoms or an ω-oxaalkyl-alkyl radical having a total of 2-10 carbon atoms,
**R³** is an alkyl radical having 1-6 carbon atoms or an ω-oxaalkyl-alkyl radical having a total of 2-10 carbon atoms,
**x** is 1-8, and
**a** is 0, 1, 2 or 3.

7. Process according to Claim 1 to 6, wherein **x** is 1 or 3.

8. Process according to Claim 2, wherein the thickness of the liquid film (F) is not more than 1 cm.

## Revendications

1. Procédé de clivage d'un silane à fonction carbamate (C) en un silane à fonction isocyanate (I) et un alcool, dans lequel
a) le silane à fonction carbamate (C) liquide est chauffé sous l'action d'un catalyseur (K) dans une unité d'évaporation sous une pression supérieure à 100 mbar, et
b) le silane à fonction isocyanate (I) formé est évaporé.

2. Procédé de clivage d'un silane à fonction carbamate (C) en un silane à fonction isocyanate (I) et un alcool, dans lequel
a) le silane à fonction carbamate (C) liquide est chauffé sous l'action d'un catalyseur (K) en un film liquide (F) ayant une épaisseur de couche d'au plus 5 cm et sous une pression d'au moins 80 mbar, et
b) le silane à fonction isocyanate (I) formé est évaporé.

3. Procédé selon la revendication 1 ou 2, dans lequel l'unité d'évaporation est choisie parmi les évaporateurs à couche mince, à film tombant et à court trajet.

4. Procédé selon les revendications 1 à 3, dans lequel le silane à fonction carbamate (C) est préchauffé à des températures > 100 °C avant l'introduction dans l'unité d'évaporation.

5. Procédé selon les revendications 1 à 4, dans lequel le catalyseur (K) est liquide ou soluble dans le silane à fonction carbamate (C).

6. Procédé selon les revendications 1 à 5, dans lequel le silane à fonction isocyanate (I) de formule générale (3)
OCN-(CH₂)ₓ-SiR¹ₐ(OR²)₃₋ₐ (3)
est fabriqué à partir d'un silane à fonction carbamate (C) de formule générale (4)
R³O-CO-HN-(CH₂)ₓ-SiR¹ₐ(OR²)₃₋ₐ (4)
R¹ signifiant un radical alkyle, cycloalkyle, alcényle ou aryle éventuellement à substitution halogène, qui contient 1 à 10 atomes de carbone,
R² signifiant un radical acyle, alkyle, alcényle, cycloalkyle ou aryle qui contient 1 à 10 atomes de carbone ou un radical ω-oxaalkyl-alkyle qui contient au total 2 à 10 atomes de carbone,
R³ signifiant un radical alkyle qui contient 1 à 6 atomes de carbone ou un radical ω-oxaalkyl-alkyle qui contient au total 2 à 10 atomes de carbone,
x signifiant une valeur de 1 à 8 et
a signifiant la valeur 0, 1, 2 ou 3.

7. Procédé selon les revendications 1 à 6, dans lequel x signifie 1 ou 3.

8. Procédé selon la revendication 2, dans lequel l'épaisseur de couche du film liquide (F) est d'au plus 1 cm.
